# DEMANDE DE BREVET EUROPEEN

(11) **EP 0 683 075 A1**
(43) Date de publication de la demande: **22.11.1995**
(21) Numéro de dépôt: 95400994.0
(22) Date de dépôt: 02.05.1995
(51) Int. Cl.: B60R 25/02

(54) **Antivol à limitation de couple pour colonne de direction**

(30) Priorité: 29.04.1994 FR 9405224
(71) Demandeur: REGIE NATIONALE DES USINES RENAULT S.A., F-92109 Boulogne Billancourt (FR)
(72) Inventeur: Forte, Jean-Pierre, F-95390 Saint-Prix (FR)

(57) **Abrégé**

Dispositif antivol à limitation de couple pour un arbre de direction qui comprend au moins un tronçon (5) entouré par un manchon (4) disposé dans un support (3) de colonne de direction et porteur d'une cavité (4') de réception d'un pêne (2) d'immobilisation simultané de l'arbre (5') et du manchon, caractérisé en ce que le tronçon (5) de la colonne de direction (5,5') est partiellement entouré par un matériau plastique (6) localisé dans l'espace compris entre ledit tronçon (5) et le manchon (4) et adhérisé auxdits tronçon et manchon.

## Description

La présente invention concerne un dispositif antivol pour colonne de direction de véhicule comprenant un verrou fixé à un élément de carrosserie et dont le pêne s'engage dans une cavité d'un manchon solidaire de la colonne de direction.

La publication FR-2.586.636 décrit un dispositif antivol à limitation de couple pour une colonne de direction. Ce dispositif comprend un manchon monté axialement sur l'arbre de direction et solidarisé à ce dernier par une bague de friction. L'ensemble constitué par le manchon, l'arbre de la colonne de direction et la bague de friction est immobilisé en rotation par le pêne d'une serrure engagé dans une cavité du manchon tant que le couple appliqué sur le volant demeure inférieur à une valeur prédéterminée. Lorsque le couple appliqué sur le volant dépasse cette valeur limite de glissement, la bague de friction permet le glissement de la colonne par rapport au manchon, ce qui évite une détériaoration du pêne. Un inconvénient de ce type de dispositif à bague de friction est de nécessiter un usinage très précis et donc coûteux des différentes pièces en contact, si l'on désire obtenir une valeur du couple limite de glissement dans une plage relativement étroite.

L'objet de la présente invention est de pallier les inconvénients de l'art antérieur en proposant un dispositif antivol à limitation de couple pour une colonne de direction, notamment de véhicule automobile, qui comprend au moins un tronçon entouré par un manchon disposé dans un support de colonne de direction et porteur d'une cavité de réception d'un pêne d'immobilisation simultané de l'arbre et du manchon et puisse d'une part être aisément réalisé de manière industrielle, et ce, à faible coût, tout en présentant une faible dispersion du couple limite de glissement de la colonne par rapport au manchon, lors de la production en série de tels dispositifs.

Selon une autre caractéristique de la présente invention, le tronçon de la colonne de direction est partiellement entouré par un matériau plastique localisé dans l'espace compris entre ledit tronçon et le manchon et adhérisé auxdits tronçon et manchon.

Selon une autre caractéristique de la présente invention, le manchon possède un premier et un deuxième alésages coaxiaux constitutifs des portées des extrémités d'un premier tronçon et d'un deuxième tronçon.

Selon une autre caractéristique de la présente invention, l'un des tronçons de l'arbre de direction est relié rigidement au manchon.

Selon une autre caractéristique de la présente invention, le corps du manchon comporte des logements de réception de doigts du matériau plastique.

On comprendra mieux les buts, aspects et caractéristiques de la présente invention, d'après la description donnée ci-après des modes de réalisation de l'invention présentés à titre d'exemples non limitatifs, en se référant aux dessins annexés, dans lesquels :
- la figure 1 est une vue schématique en coupe d'un dispositif de blocage à limitation de couple suivant l'invention,
- la figure 2 est une vue en coupe selon I-I de la figure 1,
- la figure 3 est une vue en coupe selon II-II de la figure 1,
- la figure 4 est une vue en coupe d'une variante de l'agencement de la figure 1.

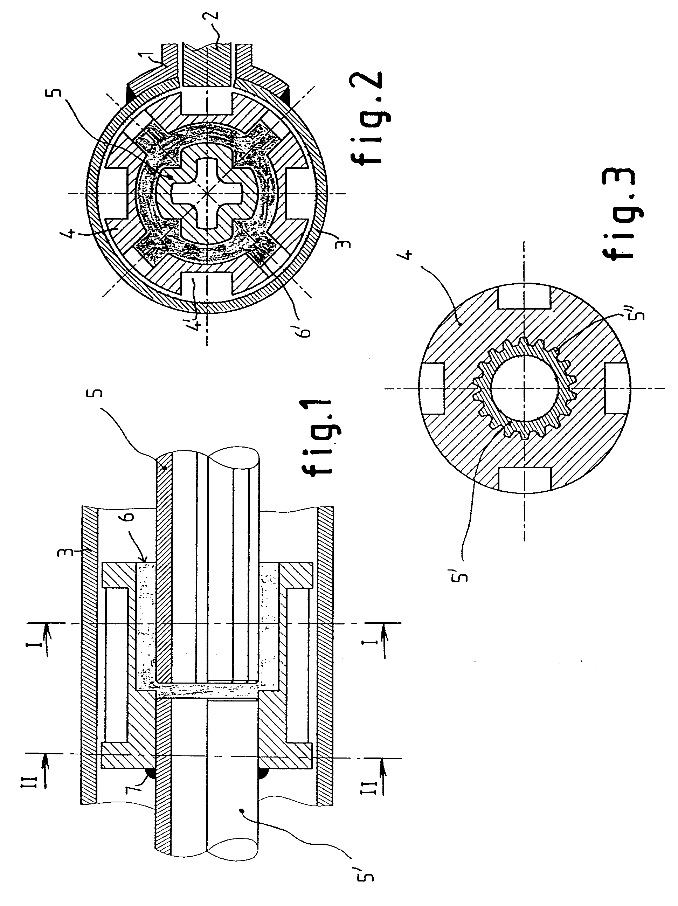

Le dispositif de blocage à limitation de couple représenté sur les figures 1 à 3 comporte un arbre de direction constitué d'un premier tronçon 5 solidarisé à un volant de direction (non représenté) et d'un deuxième tronçon 5' qui coopère avec un mécanisme de direction (non représenté) de type connu, par exemple à crémaillère.

Les premier 5 et deuxième 5' tronçons sont solidarisés à un manchon 4 constitué d'un pièce en métal massif possédant un premier et un deuxième alésages coaxiaux débouchants l'un dans l'autre. Le manchon 4 est pourvu sur sa surface extérieure de cavités 4' destinés à recevoir le pêne 2 d'une serrure 1 de blocage de la colonne de direction. La serrure 1 est portée par un support 3 de colonne de direction. De manière préférentielle, le premier tronçon 5 possède un diamètre inférieur à celui du premier alésage et le deuxième tronçon 5' un diamètre extérieur sensiblement égal à celui du deuxième alésage. Les premier et deuxième tronçons sont constitués, de manière non limitative, par des arbres pleins ou creux, et présentant une section transversale de type cannelée.

La surface du premier alésage comporte des logements 6' qui peuvent être constitués par des perçages ou des cavités réalisées par tous moyens connus.

Le deuxième tronçon 5' est fixé rigidement au manchon 4. Suivant le mode de réalisation représenté sur les figures 1 à 3, cette liaison rigide du deuxième tronçon 5' avec le manchon 4 est obtenue par un emmanchement serré d'une portion située au niveau de l'extrémité du deuxième tronçon 5' dans le deuxième alésage complété par un cordon de soudure 7 annulaire appliqué entre le deuxième tronçon 5' et le manchon 4. Le deuxième tronçon 5' peut aussi comporter une portion cannelée, ce dernier étant dans ce cas rendu solidaire du manchon 4 par les cannelures 5''.

Le premier tronçon 5 de la colonne de direction est disposé concentriquement dans le premier alésage et solidarisé avec le manchon notamment par surmoulage et adhérisation d'un matériau plastique 6 injecté dans l'espace compris entre les surfaces en regard du premier tronçon 5 et du premier alésage, ainsi que dans les logements 6'. Le matériau plastique est injecté dans cet espace par des trous (non représentés) percés dans la face latérale du manchon.

Afin de permettre une bonne adhérence du matériau plastique 6 sur la surface du premier alésage, cette dernière peut être cannelée ou subir un traitement de surface ou un usinage ayant pour effet d'augmenter sa rugosité.

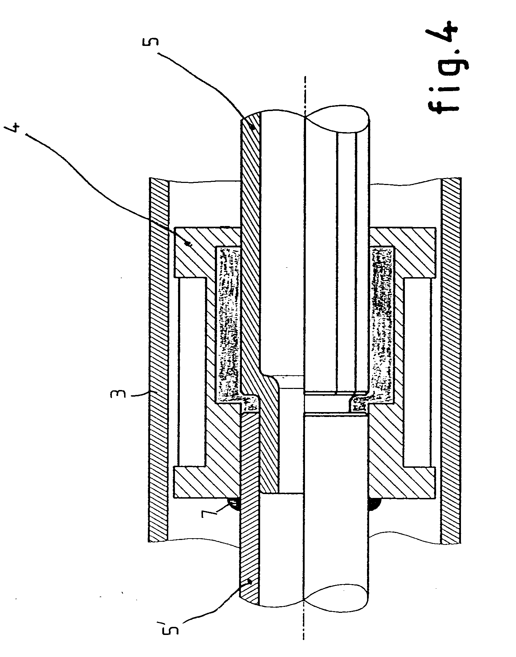

Le dispositif représenté à la figure 4 est une variante de celui représenté à la figure 1 dans laquelle une portion du premier tronçon 5 est montée glissante dans un alésage du deuxième tronçon 5' d'une part et sur un rebord d'extrémité rentrant du manchon d'autre part.

La rupture du matériau plastique s'effectue au niveau des zones constituées par les bases des doigts plastiques, l'étendue desdites zones déterminant, conjointement avec le choix du matériau plastique, la valeur du couple limite de glissement. La valeur du couple limite de glissement peut en outre aisément être modifiée par un choix particulier du matériau plastique 6, du nombre de logements 6' de réception du matériau plastique et de leur configuration géométrique.

Conformément à la description précédente et aux figures 1 à 4, le fonctionnement du dispositif est le suivant.

Préalablement à sa sortie du véhicule, le conducteur engage le pêne du verrou dans une cavité 4' de retenue afin d'interdire la rotation de la colonne de direction du véhicule.

Lorsque le couple appliqué sur le volant de direction dépasse une valeur Cmax prédéterminée, choisie de sorte qu'elle soit inférieure à la valeur du couple nécessaire à la rupture du pêne 2, les bases des doigts du matériau plastique contenus dans les logements 6' sont cisaillées, et l'ensemble constitué par le premier tronçon S et la partie du matériau plastique restant adhérisée à ce dernier peut tourner dans le premier alésage tant que le couple appliqué sur le volant de direction reste supérieur à la valeur du couple de frottement résiduel entre le matériau plastique 6 et la surface du premier alésage. La valeur du couple de frottement résiduel dépend notamment de l'état de surface de la surface du premier alésage.

La valeur du couple de frottement résiduel est choisie de façon à permettre l'entraînement en rotation du manchon par le premier tronçon 5 afin de permettre d'utiliser néanmoins le véhicule après une tentative d'effraction au cours de laquelle les des doigts plastiques ont été cisaillés au niveau de leur base respective.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**1)** Dispositif antivol à limitation de couple pour un arbre de direction qui comprend au moins un tronçon (5) entouré par un manchon (4) disposé dans un support (3) de colonne de direction et porteur d'une cavité (4') de réception d'un pêne (2) d'immobilisation simultané de l'arbre (5') et du manchon, caractérisé en ce que le tronçon (5) de la colonne de direction (5,5') est partiellement entouré par un matériau plastique (6) localisé dans l'espace compris entre ledit tronçon (5) et le manchon (4) et adhérisé auxdits tronçon et manchon.

**2)** Dispositif selon la revendication 1, caractérisé en ce que le manchon (4) possède un premier et un deuxième alésages coaxiaux constitutifs des portées des extrémités d'un premier tronçon (5) et d'un deuxième tronçon (5').

**3)** Dispositif selon la revendication 2, caractérisé en ce que l'un des tronçons (5') de l'arbre de direction est relié rigidement au manchon (4).

**4)** Dispositif selon l'une quelconque des revendications précédentes, caractérisé en ce que le corps du manchon (4) comporte des logements (6') de réception de doigts du matériau plastique (6).
